# EUROPÄISCHE PATENTANMELDUNG

(11) **EP 0 607 897 A2**
(43) Veröffentlichungstag der Anmeldung: **27.07.1994**
(21) Anmeldenummer: 94100580.3
(22) Anmeldetag: 17.01.1994
(51) Int. Cl.: F16F 13/00

(54) **Hydraulisch dämpfendes, aktives Motorlager**

(30) Priorität: 18.01.1993 DE 4301149
(71) Anmelder: METZELER GIMETALL AG, D-80992 München (DE)
(72) Erfinder: Gugsch, Mathias, Dipl.-Ing., D-80809 München (DE); Worthington, Keith, Shatteris PE16 6AR (GB)
(74) Vertreter: Seibert, Hannelore

(57) **Zusammenfassung**

Bei einem hydraulisch dämpfenden, aktiven Motorlager mit mindestens einer flüssigkeitsgefüllten Arbeitskammer, die auf einer Seite von einer als Tragfeder ausgebildeten Gummiwandung begrenzt und zwischen Motorlager und Fahrzeugkarosserie angeordnet ist, ist erfindungsgemäß zur aktiven Beeinflussung der Motorbewegungen im niederfrequenten Bereich vorgesehen, daß das Motorlager (1) eine einzige, flüssigkeitsgefüllte Kammer (2) aufweist, die auf einer Seite von der elastischen Gummiwandung (3) und auf der anderen Seite von einem volumensteifen Gehäuse (6) begrenzt und an eine externe, hydraulische Druckquelle (8) angeschlossen ist, über die der Flüssigkeitsdruck in der Arbeitskammer (2) belastungsabhängig regelbar ist.

## Beschreibung

Die Erfindung bezieht sich auf ein hydraulisch dämpfendes, aktives Motorlager mit mindestens einer flüssigkeitsgefüllten Arbeitskammer, die auf einer Seite von einer als Tragfeder ausgebildeten Gummiwandung begrenzt und zwischen Motorlager und Fahrzeugkarosserie angeordnet ist.

Hydraulisch dämpfende Motorlager weisen im allgemeinen zwei flüssigkeitsgefüllte und zumindest teilweise von elastischen Gummiwandungen umgebene Kammern auf, die über eine Drosselöffnung in einer Zwischenplatte zwischen den beiden Kammern hydraulisch miteinander in Verbindung stehen. Bei Einwirkung von Schwingungen auf eine der Kammern erfolgt ein Flüssigkeitsaustausch über die Drosselöffnung, wodurch eine gewisse Schwingungsdämpfung erfolgt. Darüberhinaus wird durch entsprechende Gestaltung der Wandungen und der Drosselöffnung nicht nur eine Dämpfung niederfrequenter Schwingungen erreicht, sondern darüberhinaus auch das akustische Übertragungsverhalten verbessert, d.h. daß weniger akustische Schwingungen auf die Karosserie übertragen werden.

Demgegenüber liegt der vorliegenden Erfindung die Aufgabe zugrunde, ein hydraulisch dämpfendes, aktives Motorlager zu schaffen, das Motorbewegungen im niederfrequenten Bereich, d.h. in einem Bereich von 4 bis 25 Hz, beeinflussen kann, wobei Kräfte von etwa 400 N erzeugt werden müssen, um eine solche Beeinflussung zu bewerkstelligen. Dabei soll dieses Motorlager nicht mehr Bauraum beanspruchen als herkömmliche Motorlager und soll darüberhinaus im aktiven Zustand eine dynamische Verhärtung der Lagerung weitgehend vermeiden.

Zur Lösung dieser Aufgabe ist erfindungsgemäß vorgesehen, daß das Motorlager eine einzige, flüssigkeitsgefüllte Kammer aufweist, die auf einer Seite von der elastischen Gummiwandung und auf der anderen Seite von einem volumensteifen Gehäuse begrenzt und an eine externe, hydraulische Druckquelle angeschlossen ist, über die der Flüssigkeitsdruck in der Arbeitskammer belastungsabhängig regelbar ist.

Damit ist ein aktives Lager geschaffen, bei dem die Drücke in der Arbeitskammer nicht durch passive Massen- und Dämpfungseffekte, sondern durch einen Hydraulikkreislauf aktiv beeinflußt werden.

Zur Druckregelung ist es dabei möglich, daß der die hydraulische Druckquelle enthaltende Hydraulikkreislauf aus einer über einen Zulauf in die Arbeitskammer einspeisenden Druckpumpe und einem gesonderten, drosselgeregelten Ablauf besteht.

Es ist aber auch möglich, daß der Hydraulikkreislauf aus einem Primärkreislauf mit einem an die Arbeitskammer angeschlossenen Hydraulikzylinder mit einem Hydraulikkolben zur Erzeugung von Über- und Unterdruck in der Arbeitskammer sowie einem Sekundärkreislauf mit einem doppelt wirkenden Hydraulikzylinder besteht, dessen beidseitig beaufschlagbarer Kolben über entsprechende Steuerventile umsteuerbar und mit dem Kolben des Primärkreislaufes direkt gekoppelt ist.

Durch diese Anordnung ist es möglich, mit einem immer nur positive Drücke liefernden Pumpenkreislauf in dem Lager sowohl Über- als auch Unterdrücke zu erzeugen.

Es ist aber auch möglich, daß der Primärkolben direkt durch elektrische oder pneumatische Stellmittel oder andere Krafterzeuger betätigbar ist.

Zur Lösung der eingangs gestellten Aufgabe ist es erfindungsgemäß aber auch möglich, das Motorlager als Hydrobuchse mit einem zylindrischen Außengehäuse und einer zylindrischen Innenhülse auszubilden, die über horizontale Gummistege derart mit der Außenhülse verbunden ist, daß zwei unabhängige Arbeitskammern oberhalb und unterhalb der Gummistege gebildet sind und daß beide Arbeitskammern an eine hydraulische Druckquelle angeschlossen sind, über die der Flüssigkeitsdruck in der Arbeitskammer belastungsabhängig regelbar ist.

Eine solche Gestaltung ist besonders zweckmäßig, wenn man mit einem Hydraulikkreislauf arbeitet, der direkt die Drücke im Lager beeinflußt.

Dabei ist es zweckmäßig, wenn beide Arbeitskammer an eine einzige Druckquelle angeschlossen sind und jede Arbeitskammer einen über eine regelbare Drossel beeinflußbaren Ablauf aufweist. Damit kann mit einem Pumpenkreislauf, der immer nur positive Drücke erzeugt, eine oszillierende Kraft mit wechselnden Vorzeichen erzeugt werden.

Anhand einer schematischen Zeichnung sind Aufbau und Funktionsweise von Ausführungsbeispielen nach der Erfindung näher erläutert. Dabei zeigen:
- Fig. 1: das Grundschaltbild eines solchen aktiven Motorlagers,
- Fig. 2: ein Motorlager mit einem hydraulischen Primärkreislauf und einem Sekundärkreislauf und
- Fig. 3: ein aktives Motorlager in einer Ausbildung als Hydrobuchse.

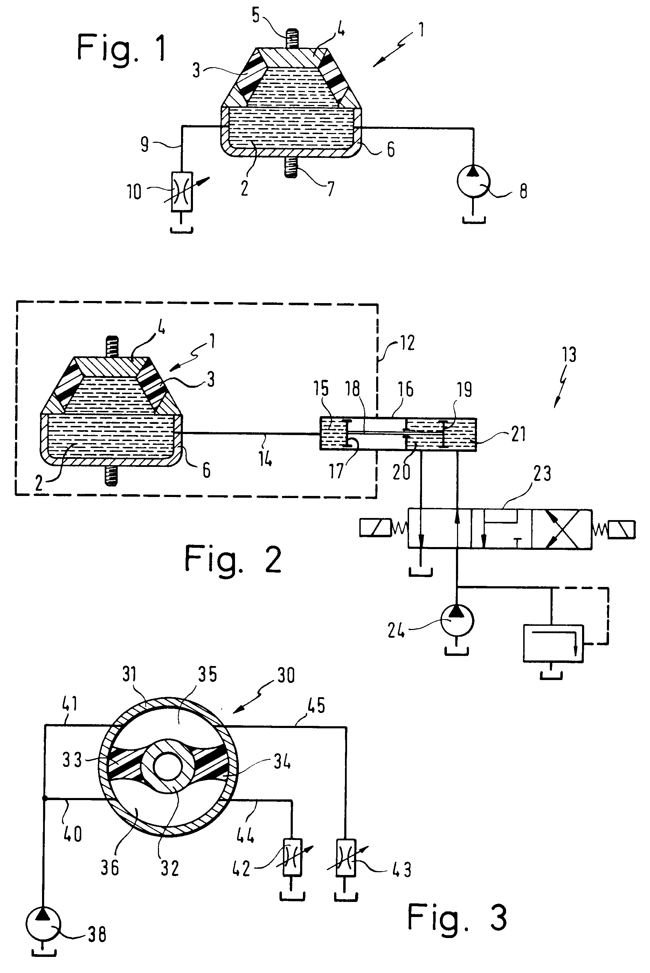

Fig. 1 zeigt ein hydraulisch dämpfendes Motorlager 1 mit einer einzigen, flüssigkeitsgefüllten Kammer 2. Das Oberteil des Motorlagers 1 ist mit einer starkwandigen, hohlkegelförmigen Gummiwandung 3 umschlossen, die am oberen Ende eine Lagerplatte 4 mit einem Anschlußbolzen 5 an den nicht näher dargestellten Motor aufweist. Das Unterteil des Motorlagers 1 besteht aus einem volumensteifen Gehäuse 6, das mit der als Tragfeder wirkenden Gummiwandung 3 verbunden ist und auf seiner Unterseite einen Schraubbolzen 7 zum Anschluß an die nicht näher dargestellte Fahrzeugkarosserie aufweist.

Die Arbeitskammer 2 ist nunmehr an einen äußeren Hydraulikkreislauf in Form einer in die Arbeitskammer 2 einspeisenden Druckpumpe 8 und einen gesonderten Ablauf 9 mit einer Drosselstelle 10 angeschlossen.

Durch einen solchen Hydraulikkreislauf können nunmehr in der Arbeitskammer Druckkräfte aufgebaut werden, die Motorbewegungen im niederfrequenten Bereich von etwa 4 bis 25 Hz beeinflussen, d.h. Schwingungsbewegungen des Motors in vertikaler Richtung können nach unten in ihrer Amplitude begrenzt werden, während Aufwärtsbewegungen des Motors durch eine entsprechende Druckabsenkung in der Arbeitskammer ebenfalls minimiert werden können. Gleichzeitig läßt sich das Abklingverhalten der Schwingbewegungen beeinflussen. Dabei können durch diesen Hydraulikkreislauf die erforderlichen Kräfte von ca. 400 N sicher erzeugt werden.

Somit werden also die Drücke in der Arbeitskammer nicht durch passive Massen und Dämpfungseffekte, sondern durch den besagten Hydraulikkreislauf aktiv beeinflußt.

Fig. 2 zeigt ein gleichartiges Motorlager 1 mit elastischer Gummiwandung 3 und volumensteifem Gehäuse 6, die die einzige Kammer 2 umschließen. Hierbei ist zur Beeinflussung der Lagerdrücke jedoch ein erweiterter Hydraulikkreislauf mit einem Primärkreislauf 12 innerhalb des gestrichelten Bereiches und einem außenliegenden Sekundärkreislauf 13 vorgesehen.

Dabei ist nunmehr die Arbeitskammer 2 über eine externe Leitung 14 an die Druckkammer 15 eines Zylinders 16 mit Doppelkolben angeschlossen. Der Zylinder 16 weist dabei einen Druckkolben 17 auf, der nur einseitig auf die Flüssigkeit in der Kammer 15 einwirkt, während der Druckkolben 17 über ein Gestänge 18 mit einem weiteren Kolben 19 verbunden ist, auf den beidseitig Druckflüssigkeit in den Kammern 20 und 21 einwirken kann. Diese Flüssigkeitskammern 20 und 21 können über eine Druckpumpe 24 und entsprechende Steuerventile 23 wechselseitig mit Flüssigkeit beaufschlagt werden, wodurch über den Kolben 17 in der Arbeitskammer 2 unterschiedliche Drücke erzeugt werden können.

Durch die vorstehend beschriebene Anordnung ist es möglich, mit einem stets nur positive Drücke liefernden Pumpenkreislauf in dem Lager sowohl Überdrücke als auch Unterdrücke zu erzeugen.

Anstelle eines gesonderten Sekundärkreislaufes können alternativ aber auch Stellmotoren, Elektromagnete oder sonstige Krafterzeuger verwendet werden, die die Bewegung des Druckkolbens 17 bewerkstelligen.

Fig. 3 zeigt eine weitere Lösungsmöglichkeit für die gestellte Aufgabe. Hierbei ist das Motorlager als Hydrobuchse 30 ausgebildet. Eine solche Hydrobuchse 30 weist ein zylindrisches Außengehäuse 31 und eine konzentrisch dazu liegende Innnenhülse 32 auf, wobei diese Innenhülse 32 über horizontale, einander gegenüberliegende Gummistege 33 und 34 mit dem Außengehäuse 31 verbunden ist.

Durch diese Gummistege 33 und 34 und die Innenhülse 32 werden damit zwei flüssigkeitsmäßig nicht miteinander in Verbindung stehende Arbeitskammern 35 und 36 gebildet, die mit Flüssigkeit gefüllt sind.

Über eine Druckpumpe 38 und getrennte Zuläufe 40 und 41 können die beiden Kammern 35 und 36 mit Flüssigkeit beaufschlagt werden, deren Druck über die gesondert angeschlossenen Drosselventile 42 und 43 gesteuert werden kann.

Da dieses Lager 30 somit zwei Arbeitskammern 35 und 36 aufweist, die sich geometrisch gegenüberliegen, kann mit einem Pumpenkreislauf, der immer nur positive Drücke erzeugt, eine oszillierende Kraft mit wechselnden Vorzeichen erzeugt werden.

Insgesamt besteht die Besonderheit der beschriebenen Motorlager darin, daß sie die Tragfunktion und die Abgabe der erforderlichen Kontrollkräfte gleichzeitig übernehmen und daß eine zu erwartende dynamische Verhärtung im Moment der Aktivierung die von herkömmlichen Hydrolagern her bekannten Werte nicht überschreitet.

Da derartige Hydraulikkreisläufe sehr schnell und präzise geregelt werden können, kann somit diese aktive Lagerung auch Einfluß auf das hochfrequente Schwingungsverhalten nehmen, um damit auch im gewissen Umfange das akustische Übertragungsverhalten zu beeinflussen.

## Patentansprüche

**1.** Hydraulisch dämpfendes, aktives Motorlager mit mindestens einer flüssigkeitsgefüllten Arbeitskammer, die auf einer Seite von einer als Tragfeder ausgebildeten Gummiwandung begrenzt und zwischen Motorlager und Fahrzeugkarosserie angeordnet ist, dadurch gekennzeichnet, daß das Motorlager (1) eine einzige flüssigkeitsgefüllte Kammer (2) aufweist, die auf einer Seite von der elastischen Gummiwandung (3) und auf der anderen Seite von einem volumensteifen Gehäuse (6) begrenzt und an eine externe, hydraulische Druckquelle (8; 16) angeschlossen ist, über die der Flüssigkeitsdruck in der Arbeitskammer (2) belastungsabhängig regelbar ist.

**2.** Hydraulisch dämpfendes Motorlager nach Anspruch 1, dadurch gekennzeichnet, daß der die hydraulische Druckquelle enthaltende Hydraulikkreislauf aus einer über einen Zulauf in die Arbeitskammer (2) einspeisenden Druckpumpe (8) und einem gesonderten, drosselgeregelten Ablauf (10) besteht.

**3.** Hydraulisch dämpfendes Motorlager nach Anspruch 1, dadurch gekennzeichnet, daß der Hydraulikkreislauf aus einem Primärkreislauf (12) mit einem an die Arbeitskammer (2) angeschlossenen Hydraulikzylinder (16) mit einem Hydraulikkolben (17) zur Erzeugung von Über- und Unterdruck in der Arbeitskammer (2) sowie einem Sekundärkreislauf (13) mit einem doppelt wirkenden Hydraulikzylinder besteht, dessen beidseitig beaufschlagbarer Kolben (19) über entsprechende Steuerventile (23) umsteuerbar und mit dem Kolben (17) des Primärkreislaufes (12) direkt gekoppelt ist.

**4.** Hydraulisch dämpfendes Motorlager nach Anspruch 1, dadurch gekennzeichnet, daß der Hydraulikkreislauf aus einem an die Arbeitskammer (2) angeschlossenen Hydraulikzylinder (16) mit einem Hydraulikkolben (17) zur Erzeugung von Über- und Unterdruck in der Arbeitskammer (2) besteht und der Hydraulikkolben (17) durch elektrische oder pneumatische Stellmittel betätigbar ist.

**5.** Hydraulisch dämpfendes, aktives Motorlager mit mindestens einer flüssigkeitsgefüllten Arbeitskammer, die auf einer Seite von einer als Tragfeder ausgebildeten Gummiwandung begrenzt und zwischen Motorlager und Fahrzeugkarosserie angeordnet ist, dadurch gekennzeichnet, daß das Motorlager als Hydrobuchse (30) mit einem zylindrischen Außengehäuse (31) und einer zylindrischen Innenhülse (32) ausgebildet ist, welche Innenhülse (32) über horizontale Gummistege (33, 34) derart mit der Außenhülse (31) verbunden ist, daß zwei unabhängige Arbeitskammern (35, 36) oberhalb und unterhalb der Gummistege (33, 34) gebildet sind und daß beide Arbeitskammern (35, 36) an eine hydraulische Druckquelle (38) angeschlossen sind, über die der Flüssigkeitsdruck in den Arbeitskammern (35, 36) belastungsabhängig regelbar ist.

**5.** Hydraulisch dämpfendes Motorlager nach Anspruch 5, dadurch gekennzeichnet, daß beide Arbeitskammern (35, 36) an eine einzige Druckquelle (38) angeschlossen sind und daß jede Arbeitskammer (35, 36) einen über eine regelbare Drossel (42, 43) beeinflußbaren Ablauf (44, 45) aufweist.
